Europäisches Patentamt

European Patent Office

Office européen des brevets

(19)

(11) Numéro de publication: **0 180 512**

**B1**

(12) **FASCICULE DE BREVET EUROPEEN**

(45) Date de publication du fascicule du brevet: **16.01.91**

(51) Int. Cl.⁵: **G 01 S 3/78**

(21) Numéro de dépôt: **85402035.1**

(22) Date de dépôt: **21.10.85**

(54) Dispositif de localisation et de repérage d'un object lumineux.

(30) Priorité: **22.10.84 FR 8416119**

(43) Date de publication de la demande:
**07.05.86 Bulletin 86/19**

(45) Mention de la délivrance du brevet:
**16.01.91 Bulletin 91/03**

(84) Etats contractants désignés:
**AT BE CH DE GB IT LI LU NL SE**

(56) Documents cités:
**DE-A-2 151 452**
**US-A-2 966 823**
**US-A-3 092 911**

(73) Titulaire: **R.A.T.P. REGIE AUTONOME DES TRANSPORTS PARISIENS Etablissement public à caractère industriel et commercial**
**53 ter, Quai des Grands-Augustins**
**F-75271 Paris Cédex 06 (FR)**

(72) Inventeur: **Sales, André**
**31, rue de Gometz**
**F-91440 Bures sur Yvette (FR)**
Inventeur: **Michaux, Daniel**
**8, rue Jean-Jaurès**
**F-93120 Noisy Le Sec (FR)**
Inventeur: **Brouant, Marc**
**Les Chaussins**
**F-72240 Cures (FR)**

(74) Mandataire: **Rodhain, Claude et al**
**Cabinet Claude Rodhain 30, rue la Boétie**
**F-75008 Paris (FR)**

Courier Press, Leamington Spa, England.

**Description**

La présente invention concerne un dispositif destiné à la localisation et au repérage d'un objet lumineux, et qui comporte un dispositif optique de formation d'une image de l'objet lumineux à localiser, un capteur de la position de ladite image par rapport à l'axe optique dudit dispositif optique, lesdits dispositif et capteur pouvant être orientés selon deux directions perpendiculaires, et un dispositif d'asservissement agencé pour orienter ledit dispositif optique et ledit capteur de manière que ladite image soit amenée sensiblement sur l'axe optique en effectuant un déplacement à vitesse rapide ou un déplacement à vitesse lente.

On utilise généralement un objectif à faible champ de vision pour obtenir une précision importante; le fait de prévoir tout d'abord un déplacement rapide, puis un déplacement lent pour obtenir un positionnement précis, permet de réduire le temps de réponse de l'appareil. Toutefois ce dispositif présente l'inconvénient que l'objet peut sortir du champ du dispositif optique, par exemple à la suite d'une déplacement rapide trop important, et on a alors perdu tous les avantages de rapidité recherchés.

La présente invention a pour objet un dispositif de localisation et de repérage d'un objet lumineux du type précité, qui permet d'effectuer une localisation précise et rapide sans risque que l'objet lumineux à repérer sorte du champ du dispositif optique de repérage. A cet effet, le dispositif optique de formation d'image est constitué de deux objectifs accolés, un objectif à grand angle d'ouverture et un objectif à faible angle d'ouverture, le capteur de position est constitué de deux photocellules de détection de position associées chacune à un des objectifs précités, et fournissant des signaux de coordonnées du barycentre de l'image reçue et le dispositif d'asservissement est agencé pour recevoir lesdits signaux de coordonées de la photocellule associée à l'objectif à grand angle lorsque les signaux de coordonnées peut supérieurs à une valeur de feuil donné, definissant une étape de réglage grossier, et pour recevoir lesdits signaux de la photocellule associée à l'objectif à faible angle dans le cas contraire, definissant une etape de néglage fin, et pour effectuer pendant cette étape, le déplacement à vitesse rapide ou le deplacement à vitesse lente en fonction de la valeur desdits signaux de coordonnées. Le fait de prévoir un objectif grand angle permet d'éviter que l'on perde l'objet lumineux à repérer lors des opérations de localisation et de repérage.

Selon une autre caractéristique de l'invention, les deux étapes de réglage précitées sonnt effectuées de manière simultanée et imbriquée pour les deux directions perpendiculaires précitées, l'étape de réglage fin selon une direction s'effectuant après l'étape de réglage grossier selon l'autre direction. Cette disposition permet de réduire notablement l'opération de détection et de repérage et de pouvoir ainsi localiser de nombreux objets lumineux en un temps donné.

Selon encore une autre caractéristique de l'invention le dispositif de localisation et de repérage d'un objet lumineux comporte en outre, un télémètre couplé aux deux objectifs précités. Ce télémètre permet de localiser de manière complète l'objet lumineux, les deux objectifs fournissant des données angulaires et le télémètre la distance dudit objet. Avantageusement ce télémètre comporte un laser à rayons infrarouges.

D'autres caractéristiques et avantages de l'invention ressortiront de la description qui suit, faite en se référant aux dessins ci-annexés:

— la Fig. 1 représente une vue de côté d'un dispositif de localisation et de repérage d'un objet lumineux conforme à l'invention.

— la Fig. 2 est une vue de dessus correspondant à la fig 1.

— la Fig. 3 est une vue expliquant le fonctionnement du dispositif.

— la Fig. 4 est un schéma explicatif de fonctionnement du dispositif selon l'invention.

— la Fig. 5 est un ordinogramme expliquant la séquence des opérations de localisation et de repérage, et

— a Fig. 6 est une vue illustrant une application du dispositif de localisation et de repérage conforme à la présente invention.

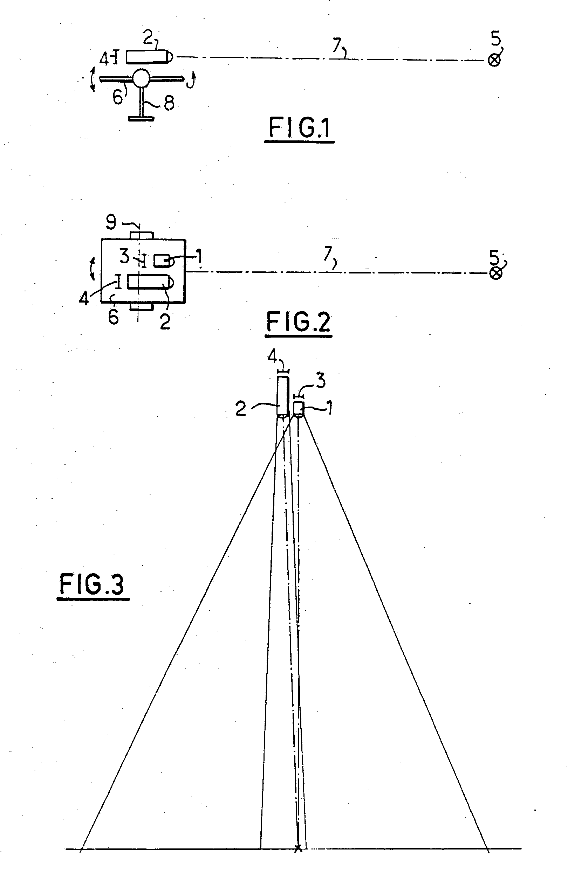

On peut voir sur les Fig. 1 à 3 le dispositif de location et de repérage selon l'invention comportant deux objectifs accolés dont les axes optiques sont pratiquement confondus, un objectif grand angle (1) et un téléobjectif (2); à chaque objectif est adjoint détecteur constitué par une cellule, la cellule (3) pour l'objectif grand angle et la cellule (4) pour le téléobjectif. Ces cellules (3 et 4) sont constituées par des photocellules de détection de position qui fournissent de manière continue les informations concernant la position suivant deux axes rectangulaires (X, Y) du barycentre de la lumière qu'elles reçoivent sur leur surface sensible. Dans le cas présent, ces cellules sont disposées de manière à recevoir l'image fournie par l'objectif et chaque cellule fournit les coordonnées en X, Y, de l'emplacement de l'image de l'object lumineux (5) qu'elle reçoit.

L'ensemble des deux objectifs (1 et 2) et des cellules (3 et 4) est disposé sur un plateau (6) parallèle à l'axe optique commun (7); ce plateau (6) est fixé sur un arbre rotatif (8) qui est perpendiculaire au plateau (6); par ailleurs ce plateau (6) est monté à rotation selon un axe (9) perpendiculaire audit arbre rotatif (8). De cette manière l'ensemble optique peut être orienté angulairement selon deux directions perpendiculaires de manière à suivre l'object lumineux (5).

Avantageusement, les mouvements de rotation de l'arbre (8) et du plateau (6) autour de l'axe (9) sont commandées par des moteurs pas-à-pas.

Un télémètre, (non représenté), est accolé au système optique en présentant le même axe optique de manière à viser également l'objet lumineux (5).

EP 0 180 512 B1

On voit sur la figure 3 les champs angulaires de vision des deux objectifs (1 et 2) et on peut se rendre compte que du fait de la présence de l'objectif grand angle, il n'est plus possible que l'on perde l'objet lumineux lorsque l'on effectue les opérations de poursuites pour sono repérage et sa localisation.

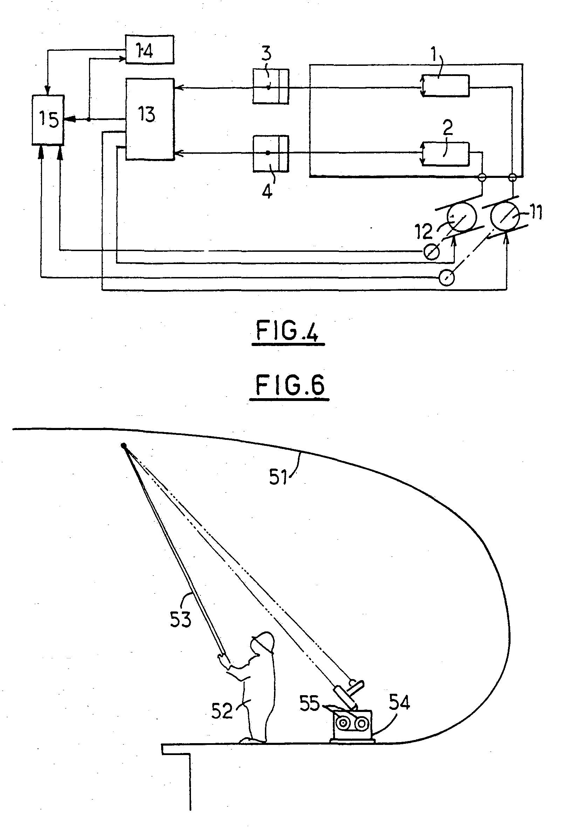

La Fig. 4 illustre de manière schématique le branchement fonctionnel du dispositif selon l'invention.

On retrouve les deux objectifs (1 et 2) et les deux cellules (3 et 4); l'ensemble optique peut être manoeuvré en rotation au moyen de deux moteurs pas-à-pas (11 et 12). Les informations de position (X G A) et (Y G A) fournies par la cellule (3), (X T E) et (Y T E) fournies par la cellule (4), sont envoyées à un circuit de calcul de la position de l'objet à repérer qui est constitué par un microprocesseur (13). Ce dernier élabore des ordres de commande des moteurs (11 et 12) de manière à effectuer les étapes de recherche rapide et de recherche lente de l'objet à détecter.

Le télémètre (14) fournit une indication concernant la distance de l'objet à repérer et il est également commandé par le micro-processeur (13); une mémoire (15) enregistre les données de position des moteurs (11 et 12) et le télémètre (14) lorsque la localisation de l'objet à repérer est terminée.

Les opérations de localisation et de repérage d'un objet lumineux comportent une étape de réglage grossier effectuée au moyen de l'objectif à grand angle puis une étape de réglage fin, effectuée au moyen du téléobjectif, chaque étape pouvant comporter des mouvements rapides et des mouvements lents des moteurs pas-à-pas (11 et 12); ceci permet d'amener l'axe optique du système sur l'objet à repérer, il suffit alors de mesurer la position angulaire des moteurs pour en déduire la position de l'objet. Conformément à l'invention, les étapes de réglage grossier et de réglage fin sont effectuées de manière simultanée et imbriquée pour les deux directions (X et Y) de manière à réaliser simultanément des réglages suivant les deux axers, c'est-à-dire que les deux moteurs pas-à-pas peuvent fonctionner simultanément, l'un pouvant être à vitesse rapide et l'autre à vitesse lente, ou tous les deux à la même vitesse.

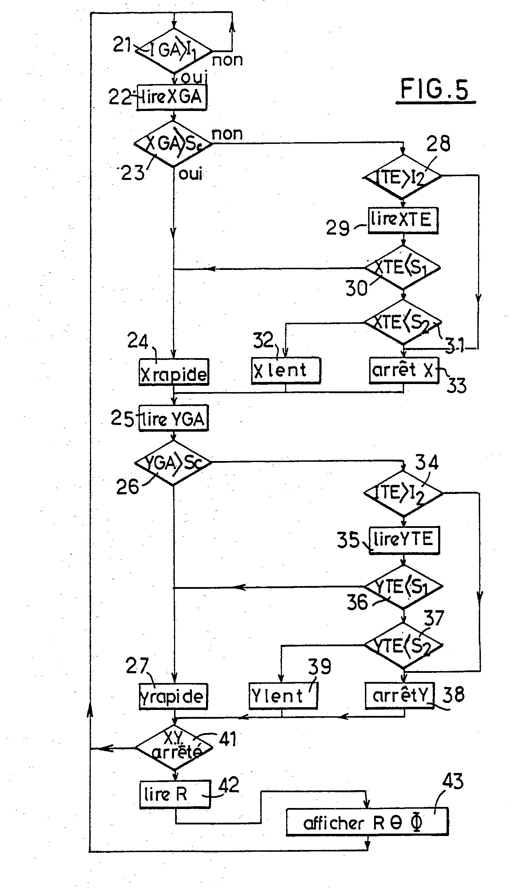

Pour bien comprendre ce fonctionnement on se reporters à l'ordinogramme de la figure 5 qui indique les principales opérations commandées par le microprocesseur (13).

Dans une première étape (21) on réalise une mesure de la lumière globale reçue par l'objectif grand angle (I G A) et on la compare à un seuil ($I_1$) qui est le seuil d'obscurité et qui arrête le système dans le cas où l'objet lumineux a été perdu, c'est-à-dire qu'il n'est pas dans le champ de l'objectif grand angle. Si la lumière est suffisante, on lit une des coordonnées de l'image fournies par l'objectif grand angle, c'est-à-dire par la cellule (3), par exemple l'abscisse (X G A) au cours d'une étape (22). L'étape suivante (23) consiste à comparer cette abscisse grand angle à une valeur de seuil ($S_c$) qui constitue un seuil de commutation sur la mesure par le téléobjectif. Si l'abscisse mesurée (X G A) est supérieure au seuil (Sc), on déclenche une étape (24) qui actionne un des moteurs pas-à-pas pour faire varier l'abscisse (X) en vitesse rapide et aussitôt après on lit l'ordonnée (Y) de l'objectif grand angle (Y,G,A) par une étape (25) que l'on compare, au cours d'une étape (26), avec la valeur de seuil ($S_c$). Si l'ordonnée (YGA) est supérieure à cette valeur de seuil ($S_c$), on fait marcher le deuxième moteur pas-à-pas à vitesse rapide pour réduire l'ordonnée (Y) par une étape (27).

Si au cours de l'étape (23) il se révèle que l'abscisse (X G A) est inférieure au seuil (Sc) de commutation sur le téléobjectif, on procède à l'étape (28) qui vérifie que l'intensité globale reçue par le téléobjectif est supérieure à un deuxième seuil d'obscurité (I2) pour s'assurer que l'object lumineux se trouve bien dans le champ du téléobjectif. Si ce test est positif on fait l'étape (29) qui lit l'abscisse (XTE) fournie par la cellule (4) du téléobjectif puis l'étape (30) qui la compare à un seuil ($S_1$) qui est un seuil de commutation en vitesse lente et qui correspond à la distance minimale entre l'image de l'objet lumineux et l'axe optique pour pouvoir arrêter le déplacement en vitesse rapide sans dépasser la position centrale du fait de l'inertie des moteurs pas-à-pas. Si l'abscisse mesurée (XTE) est supérieure à ce seuil ($S_1$), on passe à l'étape (24) par laquelle on met en route le moteur (X) à la vitesse rapide. Si elle lui est inférieure, on effectue l'étape (31) qui est une deuxième comparaison de l'abscisse (X T E) avec un seuil ($S_2$) qui correspond au seuil d'arrêt des moteurs, ce seuil étant très proche d'une valeur nulle. Si l'abscisse (XTE) est supérieure à ce seuil, on actionne le moteur (X) à la vitesse lente par l'étape (32); par contre si elle lui est inférieure, on commande l'arrêt du moteur (X) par l'étape (33). Cet arrêt du moteur (X) est également commandé si l'intensité globale de la lumière reçue par le téléobjectif est inférieure à la valeur de seuil ($I_2$) lors de l'étape (28).

Les étapes (32) et (33) précitées déclenchent l'étape (25) déja mentionnée. Si lors de l'étape (26) l'ordonnée mesurée (YGA) est inférieure au seuil (Se), c'est-à-dire que l'on a atteint le seuil de commutation sur le téléobjectif, on effectue les étapes (34 à 39) qui réalisent sur l'ordonnée (Y) les traitements analogues à ceux effectués sur l'abscisse (X). Après les étapes de commande du moteur (Y) en vitesse rapide (étape 27), en vitesse lente (étape 39) ou en arrêt (étape 38), on effectue un test (41) pour vérifier si les moteurs (X, Y) sont arrêtés. Si les deux moteurs sont arrêtés, on déclenche une étape (42) où on lit la distance (R) fournie par le télémètre et on affiche la valeur des angles de rotation (θ et Φ) des deux moteurs et la distance (R) qui donnent la position de l'objet lumineux à repérer. Après cette lecture, ou si les moteurs ne sont pas encore arrêtés tous les deux, les opérations sont répétées en recommençant à l'étape (21).

On voit donc queles différentes étapes de positionnement rapide et lent, suivant les deux axes de coordonnées (X,Y) sont imbriquées de manière qu'une étape de réglage fin, concernant l'une des coordonnées ne peut être commandée qu'après l'étape de réglage grossier de l'autre. Par cette imbrication, on diminue le temps nécessaire pour effectuer la localisation de l'objet lumineux et on utilise au mieux les possibilités du microprocesseur.

Suivant une variante de l'invention, en vue de s'affranchir des lumières parasites, on effectue une

3

mesure des coordonnée de l'objet à repérer par différenciation. En effet, si l'on reçoit sur une cellule les images de deux points lumineux, à savoir, l'objet lumineux à repérer et une autre source lumineuse constituant un bruit, les valeurs fournies par la cellule sont en fait égales à:

$$X_{S+B} = \frac{X_S \cdot I_S + X_B \cdot I_B}{I_{S+B}} \quad \text{et} \quad Y_{S+B} = \frac{Y_S \cdot I_S + Y_B \cdot I_B}{I_{S+B}}$$

c'est-à-dire les coordonnées du barycentre de l'object S et de la source de bruit B (les indices S correspondant aux grandeurs relatives à l'objet lumineux à repérer et les indices B à celles du bruit).

Conformément à l'invention, l'objet à localiser comporte une source lumineuse à fonctionnement intermitent, et on effectue de manière alternée des mesures avec éclairage et sans éclairage, de manière à obtenir par différenciation les coordonnées de l'objet à repérer.

Avantageusement, la source lumineuse est du type pulsé et on fait une acquisition de données avec la source allumée, où l'on mesure $X_{S+B}$, $Y_{S+B}$ et $I_{S+B}$, puis une acquisition de données avec la source éteinte où l'on mesure $X_B$, $Y_B$ et $I_B$. Ensuite on effectue les calculs suivants qui donnent les coordonnées $X_S$ et $Y_S$ de l'objet:

$$X_S = \frac{X_{S+B} \cdot I_{S+B} - X_B \cdot I_B}{I_{S+B} - I_B} \quad \text{et} \quad Y_S = \frac{Y_{S+B} \cdot I_{S+B} - Y_B \cdot I_B}{I_{S+B} - I_B}$$

L'invention s'applique à la localisation ou à la poursuite de source lumineuse de tout type; ellie peut par exemple être utilisée dans de nombreux domaines; un exemple particulier est la recherche d'éléments défaillants dans le carrelage d'une voûte telle qu'une voûte du réseau métropolitain. Une telle application est illustrée par la Fig. 6.

Sur cette figure on voit une voûte (51) qui est recouverte de carreaux de fayence et il s'agit de repérer les carreaux qui sont mal collés et qu'il y a lieu de remplacer. Le dispositif de repérage (54) selon l'invention est installé en un lieu fixe et défini qui servira de point origine pour les mesures. Il comporte une mémoire telle qu'un dérouleur à bande (55). Un opérateur (52) manipule une perche (53) comportant à son extrémité un dispositif destiné à sonder chacun des carreaux, ainsi qu'une source lumineuse visible par le dispositif de repérage.

Lorsque l'opérateur teste un carreau, l'opération de repérage dudit carreau se fait simultanément et les coordonnées sont enregistrées sur la mémoire (55) en même temps que le résultat du test. On voit que dans ce cas il est important que ces opérations de localisation se déroulent rapidement pour pourvoir explorer une voûte dans un minimum de temps.

**Revendications**

1. Dispositif de localisation et de repérage d'un objet lumineux, comportant un dispositif optique de formation d'une image de l'objet lumineux à localiser, un capteur de la position de ladite image par rapport à l'axe optique dudit dispositif optique, lesdits dispositif optique et capteur pouvant être orientés selon deux directions perpendiculaires, et un dispositif d'asservissement agencé pour orienter ledit dispositif optique et ledit capteur de manière que ladite image soit amenée sensiblement sur ledit axe optique en effectuant une déplacement à vitesse rapide ou un déplacement à vitesse lente, caractérisé en ce que ledit dispositif optique de formation d'image est constitué de deux objectifs accolés, un objectif à grand angle d'ouverture (1) et un objectif à faible angle d'ouverture (2) en ce que ledit capteur de position est constitué par deux photocellules (3, 4) de détection de position, associées chacune à un des objectifs précités et fournissant des signaux de coordonnées du barycentre de l'image reçue et en ce que le dispositif d'asservissement est agencé pour recevoir lesdits signaux de coordonnées de la photocellule (3) associée à l'objectif à grand angle (1) lorsque les signaux de coordonnées sont supérieurs à une valeur de seuil donné, définissant une étape de réglage grossier, et pour recevoir lesdits signaux de la photocellule (4) associée à l'objectif à faible angle (2) dans le cas contraire, definissant une étape de réglage fin, et pour effectuer pendant cette étape, le déplacement à vitesse rapide ou le déplacement à vitesse lente en fonction de la valeur desdits signaux de coordonnées.

2. Dispositif selon la revendication 1, caractérisé en ce que le dispositif d'asservissement est agencé pour que les deux étapes de réglage soit effectuées de manière imbriquée pour les deux directions perpendiculaires précitées (X, Y), l'étape de réglage fin selon une direction s'effectuant après l'étape de réglage grossier selon l'autre direction.

3. Dispositif selon la revendication 1, caractérisé en ce qu'il comporte en outre, un télémètre (14) couplé aux deux objectifs précités (1, 2).

4. Dispositif de localisation selon la revendication 3, caractérisé en ce que le télémètre précité (14) comporte un laser à infrarouges.

5. Dispositif pour l'une quelconque des revendications 1 à 4, caractérisé en ce que les deux objectifs (1, 2) et les deux capteurs de position (3, 4) sont disposés sur un plateau (6) fixé sur un arbre rotatif (8) perpendiculaire au plan dudit plateau qui est articulé selon un axe (9) situé dans son plan et perpendiculaire audit arbre rotatif (8).

6. Dispositif selon la revendication 5, caractérisé en ce que les mouvements de rotation du plateau sont commandés par des moteurs pas-à-pas (11, 12) dont les pas de déplacement sont comptés et envoyés à un circuit de mémorisation (15) de la position de l'objet à repérer (5).

7. Dispositif selon la revendication 6, caractérisé en ce que lesdits moteurs (11, 12) sont commandés par un circuit de calcul (13) qui reçoit en entrée les signaux desdites photocellules (3 et 4).

8. Dispositif selon la revendication 7, caractérisé en ce que l'objet à localiser (5) comportant une source lumineuse à fonctionnement intermitent, lesdits signaux di coordonnées sont obtenus successivement avec et sans éclairage de ladite source, et le circuit de calcul (13) calcule l'action sur les moteurs (11 et 12) à partir des signaux obtenus lors de deux mesures successives.

9. Dispositif de repérage d'un appareil de test de paroi (53) caractérisé en ce qu'il comporte une source lumineuse solidaire dudit appareil et un dispositif de localisation selon l'une quelconque des revendications 1 à 8.

## Patentansprüche

1. Vorrichtung zum Auffinden und zur Ortsbestimmung eines leuchtenden Objektes, bestehend aus einer optischen Vorrichtung zur Abbildung des aufzufindendenleuchtenden Objektes, einem Sensor für die Position dieses Bildes relativ zur optischen Achse der genannten optischen Vorrichtung, wobei die genannte optische Vorrichtung und der Sensor in zwei senkrecht zueinander stehenden Richtungen orientiert werden können und aus einer Steuervorrichtung, die zur Ausrichtung der genannten optischen Vorrichtung und des Sensors derart eingerichtet ist, daß das genannte Bild im wesentlichen auf die optische Achse gebracht wird, wobei sie eine Bewegung mit hoher Geschwindigkeit oder eine Bewegung mit geringer Geschwindigkeit ausführen, dadurch gekennzeichnet, daß die genannte optische Abbildungsvorrichtung aus zwei aneinandergebauten Objektiven, einem Objektiv mit großem Öffnungswinkel (1) und einem Objektiv mit geringem Öffnungswinkel (2) besteht, daß der genannte Positionssensor aus zwei Photozellen (3, 4) besteht zum Erfassen der Position, die jeweils mit einem der vorgenannten Objektive verbunden sind und Koordinatensignale des Schwerpunktes des empfangenen Bildes liefern, und daß die Steuerungsvorrichtung derart ausgebildet ist, daß sie die genannten Koordinatensignale der mit dem Weitwinkelobjektiv (1) verbundenen Photozelle (3) empfängt, wenn die Koordinatensignale einen gegebenen Schwellenwert überschreiten, wodurch ein Grobeinstellungsschritt bestimmt wird, und daß sie anderenfalls die genannten Signale der mit dem Objektiv geringen Winkels verbundenen Photozelle (4) empfängt, wodurch ein Feineinstellungsschritt bestimmt wird, und ferner derart, daß sie in diesem Schritt die Bewegung mit hoher Geschwindigkeit oder die Bewegung mit geringer Geschwindigkeit in Abhängigkeit vom Wert der genannten Koordinatensignale ausführt.

2. Vorrichtung nach Anspruch 1, dadurch gekennzeichnet, daß die Steuervorrichtung derart angeordnet ist, daß die beiden Steuerungsschritte für die beiden vorgenannten, aufeinander senkrecht stehenden Richtungen (X, Y) überlappend erfolgen, wobei der Feineinstellungsschritt in der einen Richtung nach dem Grobeinstellungsschrittin der anderen Richtung erfolgt.

3. Vorrichtung nach Anspruch 1, dadurch gekennzeichnet, daß sie darüberhinaus ein an die beiden vorgenannten Objektive (1, 2) gekoppeltes Telemeter (14) aufweist.

4. Vorrichtung zum Auffindem nach Anspruch 3, dadurch gekennzeichnet, daß das vorgenannte Telemeter (14) einen Infrarotlaser aufweist.

5. Vorrichtung nach einem der Ansprüche 1 bis 4, dadurch gekennzeichnet, daß die beiden Objektive (1, 2) und die beiden Positionssensoren (3, 4) auf einer Platte (6) angeordnet sind, die auf einer drehbaren, senkrecht zur Ebene der genannten Platte stehenden Welle (8) befestigt ist, die entsprechend einer in dieser Ebene liegenden und senkrecht auf der genannten drehbaren Welle (8) stehenden Achse (9) gelenkig gelagert ist.

6. Vorrichtung nach Anspruch 5, dadurch gekennzeichnet, daß die Drehbewegung der Platte durch Schrittmotoren (11, 12) erfolgen, deren Bewegungsschritte gezählt und einem Speicherschaltkreis (15) zur Speicherung der Position des zu ortenden Objektes (5) zugeführt werden.

7. Vorrichtung nach Anspruch 6, dadurch gekennzeichnet, daß die genannten Motoren (11, 12) durch einen Rechenschaltkreis (13) betätigt werden, der die Signale der genannten Photozellen (3 und 4) als Eingangssignale empfängt.

8. Vorrichtung nach Anspruch 7, dadurch gekennzeichnet, daß das aufzufindende Objekt (5) eine Lichtquelle mit intermittierender Funktion trägt, die genannten Koordinatensignale nacheinander mit und ohne Bleuchtung durch die genannte Quelle aufgenommen werden und der Rechenschaltkreis (13) die Betätigung der Motoren (11 und 12) aus Signalen aus zwei aufeinanderfolgenden Messungen berechnet.

9. Vorrichtung zur Ortung eines Prüfgerätes für Wände (53), dadurch gekennzeichnet, daß sie eine mit dem genannten Gerät fest verbundene Lichtquelle umfaßt und eine Vorrichtung zum Orten nach einem der Patentansprüche 1 bis 8.

5

## Claims

1. Apparatus for locating and for marking a light-emitting object, comprising an optical apparatus for forming an image of the light-emitting object to be located, a sensor for sensing the position of the said image relative to the optical axis of the said optical apparatus, the said optical apparatus and the said sensor being capable of being orientated in two perpendicular directions; and an automatic-control apparatus arranged for orientating the said optical apparatus and the said sensor in such a manner that the said image is brought substantially onto the said optical axis by performing a fast-speed displacement, or a slow-speed displacement; characterised in that the said optical apparatus for forming an image is constituted by two lenses coupled together, a lens having a wide angle (1) and a lens having a small angle (2); in that the said position sensor is constituted by two photocells (3, 4) for detection of position, each associated with one of the aforesaid lenses and providing co-ordinates signals of the barycentre of the image received; and in that the automatic-control apparatus is arranged for receiving the said co-ordinates signals from the photocell (3) associated with the wide-angle lens (1) when the co-ordinates signals are greater than a given threshold value, defining a coarse control stage, and for receiving the said signals from the photocell (4) associated with the small-angle lens (2) in the contrary case, defining a fine control stage, and for performing, during this stage, the fast-speed displacement or the slow-speed displacement, as a function of the value of the said co-ordinates signals.

2. Apparatus according to claim 1, characterised in that the automatic-control apparatus is so arranged for the two control stages to be performed in overlapping manner in the two aforementioned perpendicular directions (X, Y), the fine-control stage in one direction being performed after the coarse-control stage in the other direction.

3. Apparatus according to claim 1, characterised in that it furthermore comprises a telemeter (14) coupled to the two aforesaid lenses (1, 2).

4. Locating apparatus according to claim 3, characterised in that the aforesaid telemeter (14) comprises an infra-red laser.

5. Apparatus for any one of the claims 1 to 4, characterised in that the two lenses (1, 2) and the two position sensors (3, 4) are disposed on a plate (6) which is fixed on a rotary shaft (8) which is perpendicular to the plane of the said plate, which plate is pivoted about an axis (9) lying in its plane and perpendicular to the said rotary shaft (8).

6. Apparatus according to claim 5, characterised in that the rotating movements of the plate are controlled by step motors (11, 12) whose displacement steps are counted and are sent to a memory circuit (15) for memorising the position of the object to be marked (5).

7. Apparatus according to claim 6, characterised in that the said motors (11, 12) are controlled by a calculating circuit (13) which receives, at its input, the signals from the said photo-cells (3 and 4).

8. Apparatus according to claim 7, characterised in that the object to be located (5) comprises an intermittently functioning light-emitter, the said co-ordinates signals being obtained successively with and without light from the said emitter, and the calculating circuit (13) calculates the action on the motors (11 and 12) on the basis of the signals obtained during two successive measurements.

9. Marking apparatus of a wall testing apparatus (53), characterised in that it comprises a light-emitter which is integral with the said testing apparatus, and a locating apparatus according to any one of the claims 1 to 8.

FIG.1

FIG.2

FIG.3

**FIG.4**

**FIG.6**

FIG.5